# EUROPÄISCHE PATENTSCHRIFT

(11) **EP 1 588 044 B1**
(45) Veröffentlichungstag und Bekanntmachung des Hinweises auf die Patenterteilung: **26.03.2008**
(21) Anmeldenummer: 04701890.8
(22) Anmeldetag: 14.01.2004
(51) Int. Cl.: F02M 37/22, B01D 36/00

(54) **VERDAMPFUNGSEINHEIT F R EINEN KRAFTSTOFFFILTER**
EVAPORATION UNIT FOR A FUEL FILTER
UNITE D'EVAPORATION POUR UN FILTRE A CARBURANT

(30) Priorität: 21.01.2003 DE 10302057
(43) Veröffentlichungstag der Anmeldung: 26.10.2005
(73) Patentinhaber: ROBERT BOSCH GMBH, 70442 Stuttgart (DE)
(72) Erfinder: DE LA AZUELA, Julian, E-28006 Madrid (ES)
(86) Internationale Anmeldenummer: PCT/DE2004/000028
(87) Internationale Veröffentlichungsnummer: WO 2004/065780

(56) Entgegenhaltungen:
- DE-A- 10 138 695
- PATENT ABSTRACTS OF JAPAN vol. 011, no. 053 (C-404), 19. Februar 1987 (1987-02-19) & JP 61 216701 A (NIPPON DENSO CO LTD), 26. September 1986 (1986-09-26)
- PATENT ABSTRACTS OF JAPAN vol. 013, no. 182 (C-591), 27. April 1989 (1989-04-27) & JP 01 011609 A (NIPPON DENSO CO LTD), 17. Januar 1989 (1989-01-17)

## Beschreibung

Die Erfindung betrifft einen Kraftstofffilter, insbesondere einen Dieselfilter, mit einem Kraftstoffeinlass, einem Kraftstoffauslass und Mitteln zum Trennen und Abführen von Wasser aus dem Kraftstoff und dem Kraftstofffilter.

Kraftstofffilter werden unter anderem in Dieselmotoren zum Herausfiltern von in Dieselkraftstoff enthaltenen Partikeln und von Wasser eingesetzt, um hierdurch verursachte Störungen und Schäden wie beispielsweise eine Verunreinigung des Kraftstoffsystems, eine schlechtere Verbrennung oder Korrosion im Kraftstoffsystem zu vermeiden. In herkömmlichen Dieselfiltern ist hierfür ein Filterelement mit einem Wasserabscheider und unterhalb des Filterelements ein Sumpf vorgesehen, in dem sich aus dem Kraftstoff abgeschiedenes Wasser sammeln kann. Während der gefilterte Kraftstoff über den Kraftstoffauslass aus dem Kraftstofffilter hinausströmt, wird das im Sumpf am Boden des Kraftstofffilters gesammelte Wasser über einen dem Sumpf zugeordneten Wasserauslass abgeführt.

Aus der US 4,264,442 ist ein Kraftstofffilter mit einem Sumpf bekannt, bei dem am Boden des Sumpfes ein über ein Ventil verschließbarer Wasserauslass angeordnet ist, der über eine Leitung mit einer nachgeordneten Kammer verbunden ist. Das Ventil wird mit Hilfe eines im Sumpf angeordneten Wasserstandssensors gesteuert. Wird über den Sensor festgestellt, dass sich eine bestimmte Wassermenge im Sumpf angesammelt hat, wird das Ventil geöffnet, ein wesentlicher Teil des Wassers aus dem Sumpf abgesaugt und über die Leitung in die nachgeordnete Kammer abgeführt. Ein wesentlicher Nachteil dieser Lösung besteht darin, dass die Kammer zum Auffangen des Wassers in regelmäßigen Abständen entleert werden muss und der Kraftstofffilter insofern nicht wartungsfrei ist.

Dieser Nachteil besteht nicht bei einem aus der US 4,637,351 bekannten Kraftstofffiltersystem, bei dem der Wasserauslass über verschiedene Leitungen und Kammern mit dem Luftansaug- bzw. dem Abgassystem des Motors verbunden und hierüber mit einem Unterdruck beaufschlagt ist. Stellt der Wasserstandssensor eine bestimmte Menge Wasser im Sumpf des Kraftstofffilters fest, wird das Ventil über einen Elektromagneten geöffnet, so dass das im Sumpf angesammelte Wasser durch den Unterdruck abgesaugt und dem Luftansaug- bzw..Abgassystem zugeführt wird. Im Ergebnis verdampft das abgeführte Wasser entweder bei der Verbrennung oder im Auspuff.

Zwar wird bei diesem System das Wasser über den Motor direkt entsorgt, allerdings besteht der Nachteil, dass die Anbindung des Wasserauslasses des Kraftstofffilters an den Motor aufwändig und somit teuer ist. Darüber hinaus besteht beim Zuführen des Wassers in das Luftansaugsystem des Motors der Nachteil, dass die Verbrennungsluft während der Entwässerung des Kraftstofffilters wesentlich feuchter ist und insofern zumindest kurzzeitig die Verbrennung beeinträchtigt wird.

Ein einfaches Ablassen des Wassers aus solchen Kraftstofffiltern ist auch nicht möglich, da das im Filter abgeschiedene Wasser aufgrund fehlender Sauberkeit die Umwelt belasten würde.

Die JP-A-61.216701 zeigt einen Kraftstofffilter mit einem Kraftstoffraum und einem Wassersammelraum, der über eine Membran von dem Kraftstoffraum getrennt ist. Durch die poröse Membran wird Wasser aus dem Kraftstoffraum in den Wassersammelraum separiert.

Bei dem in der Erfindung vorgeschlagenen Kraftstofffilter ist auf der Permeatseite der Membran ein Aktivkohlefilter vorgesehen. Dies bietet den Vorteil, dass selbst bei einem mechanischen Defekt der Membran ein Austreten von Öl verhindert wird.

Der Kraftstofffilter kann hinsichtlich des Abführens von Wasser unabhängig von anderen Motorteilen betrieben werden, und er ist wartungsfrei. Auch sollte der Kraftstofffilter einfach aufgebaut und somit günstig in der Herstellung sein.

Bei dem Kraftstofffilter wird durch mindestens eine semipermeable Membran Wasser aus dem Kraftstofffilter abgeführt.

Die semipermeable Membran bietet zwei wesentliche Vorteile. Zum einen wird es damit möglich, das im Kraftstoff enthaltene Wasser kontinuierlich aus dem Kraftstofffilter abzuführen. Hierdurch ist ein Ventilsystem mit Füllstandskontrolle und entsprechender Ventilsteuerung überflüssig, so dass der konstruktive Aufbau des Kraftstöfffilters einfach ist. Zum anderen ist das über die Membran aus dem Kraftstofffilter abgeführte Wasser sauber. Insofern kann das Wasser einfach an die Umgebung abgegeben werden.

Grundsätzlich kommt jede Art einer Membran zum Abführen des Wassers aus dem Kraftstofffilter in Betracht, solange sie geeignet ist, Wasser von den übrigen im Kraftstoff enthaltenen Inhaltsstoffen, insbesondere vom Kraftstoff selbst, zu trennen. Besonders bevorzugt werden für die Pervaporation geeignete Membranen verwendet, insbesondere quervernetzte, asynchrone PVA (Polyvinylalkohol) Composite-Membranen.

Der besondere Vorteil der Pervaporation als Trennverfahren besteht darin, dass das abzuführende Wasser als Wasserdampf abgeführt wird und als solcher an die Umgebung abgegeben werden kann.

Um hohe Flüsse und Selektivitäten bei der Pervaporation zu erreichen, wird beispielsweise permeatseitig ein Unterdruck angelegt, so dass der permeatseitige Druck kleiner als der Wasserdampfdruck in der Membran ist. Hierfür sind in einer bevorzugten Ausführungsform entsprechende Mittel, beispielsweise eine Vakuumpumpe, vorgesehen.

In anderer bevorzugter Ausführung werden Membranen verwendet, die mit einer aus Zeolith-Kristallen gebildeten Schicht aufgebaut sind. Auch diese Membranen sind für eine Stofftrennung durch Pervaporation geeignet. Hierfür kann beispielsweise heiße Luft an der Permeatseite der Membran vorbeigeführt werden, die den Wasserdampf aufnimmt und von der Membran wegführt. Als Substrat für die Zeolithkristalle wird bevorzugt ein Stahlsinterkörper verwendet.

Um die Betriebsparameter für das Membrantrennverfahren auf der Permeatseite der Membran gezielt beeinflussen zu können, ist dort vorzugsweise eine Permeatkammer vorgesehen.

Bei dem zuvor beschriebenen Stahlsinterkörper kann der Aktivkohlefilter unmittelbar an der permeatseitigen Oberfläche des Sinterkörpers angeordnet sein. Es ist aber auch möglich, permeatseitig eine Permeatkammer vorzusehen, an deren Ausgang ein Aktivkohlefilter vorgesehen ist.

In einer typischen und insoweit bevorzugten Ausführung der Erfindung weist der Kraftstofffilter einen Wasserabscheider und einen Sumpf auf, wobei die Membran im Bereich des Sumpfs, insbesondere am Boden des Sumpfs, angeordnet ist. Der Sumpf sollte je nach Ausführung und Durchflusskapazität der Membran eine ausreichende Größe haben, um die bei der Abscheidung von Wasser aus dem Kraftstoff anfallende Wassermenge puffern zu können. Dies ist insbesondere dann von Vorteil, wenn - wie in vielen heutigen Kraftstoffsystemen - die Durchflussrate durch den Kraftstofffilter hoch ist, wobei nur ein geringer Teil des von der Kraftstoffpumpe aus dem Tank geförderten Kraftstoffs der Verbrennung zugeführt wird und die verbleibende Menge des Kraftstoffs in den Tank zurückgeführt wird. Dieser Kraftstoffkreislauf vom Tank über den Filter wieder zurück in den Tank hat den Vorteil, dass im Kraftstoff enthaltenes Wasser frühzeitig aus dem Tank abgeführt und damit ein insbesondere dauerhaftes Absetzen von Wasser am Tankboden vermieden wird. Bei einer solchen "Vorfilterung" des im Tank befindlichen Kraftstoffs fallen insbesondere zu Beginn der Filterung und Wasserabscheidung eine größere Menge abgeschiedenen Wassers pro Mengeneinheit des gefilterten Kraftstoffs an, die sich mit zunehmender Dauer der Filterung immer weiter verringert. Gerade die zu Beginn der Filterung anfallende Menge kann die Durchflussrate der Membran je nach ihrer Größe erheblich übersteigen. Dies sollte bei der Auslegung der Größe des Sumpfes berücksichtigt werden.

Um Störungen beim Abführen des Wassers frühzeitig zu bemerken, ist es von Vorteil, wenn im Sumpf ein Wasserstandssensor angeordnet ist. Der Wasserstandssensor kann mit einer Elektronik verbunden sein, die einen Warnhinweis abgibt, wenn der Wasserpegel den Wasserstandssensor erreicht hat. Alternativ kann ein Wasserablasssystem vorgesehen sein, mit dem eine Notentleerung des Wassers aus dem Sumpf durchführbar ist, beispielsweise eine Zurückführung des Wassers in den Tank. Auch ist es möglich, über das Signal des Wasserstandssensor s die Durchflussmenge des Kraftstoffs durch den Filter zu steuern und je nach angefallener Wassermenge die im Kreislauf vom Tank über den Kraftstofffilter und wieder zurück in den Tank geführte Kraftstoffmenge zu reduzieren oder auch zu erhöhen.

Alternativ zu diesen beschriebenen Ausführungsformen kann die Membran nicht nur die Funktion des Abführens von reinem Wasser aus dem Kraftstofffilter, sondern auch die Funktion des Wasserabscheiders im Kraftstofffilter haben. Eine mögliche Ausführungsform besteht darin, dass der Kraftstoff durch eine Vielzahl von Membranröhren geführt wird, die beispielsweise parallel innerhalb einer Kammer geführt werden, durch die bei Unterdruck ein Luftstrom hindurchgeführt wird. Bei einer solchen Ausführungsform ist es sinnvoll, vor den Membranröhren einen Partikelfilter vorzusehen.

Im folgenden wird die Erfindung anhand von Figuren, in denen verschiedene bevorzugte Ausführungsformen der Erfindung im Prinzip dargestellt sind und einer den Filterprozess veranschaulichenden Grafik näher erläutert.

Es zeigen
- Figur 1: eine Prinzipskizze eines Kraftstofffilters mit einer Membran;
- Figur 2: eine Prinzipskizze eines Kraftstofffilters mit einer Zeolith-Membran;
- Figur 3: Grafik der transportierten Wasservolumina über die Zeit bei einem Kraftstofffilter gemäß Figur 1.

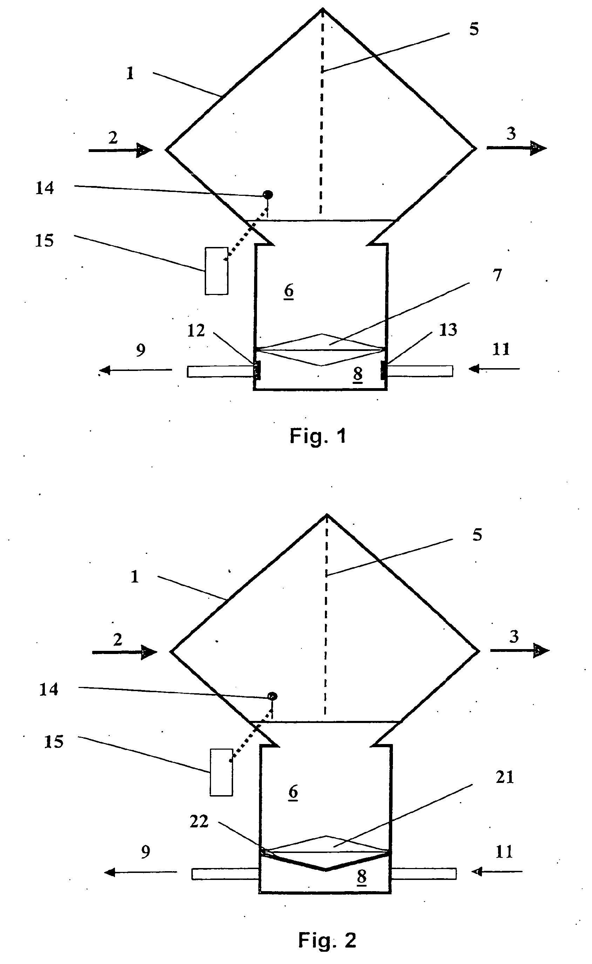

Der in Figur 1 im Prinzip dargestellte Kraftstofffilter weist ein Gehäuse **1** auf, das über einen Kraftstoffeinlass **2** und einem Kraftstoffauslass **3** mit einem Kraftstoffleitungssystem verbunden ist. Im Gehäuse **1** sind Mittel **5** zum Filtern und Abscheiden von Wasser vorgesehen, durch die der Kraftstoff hindurch geführt wird. In seinem unteren Bereich weist das Gehäuse einen Sumpf **6** auf, in dem sich aus dem Kraftstoff abgeschiedenes Wasser sammeln kann. Der Boden des Sumpfes ist durch eine Membran **7** flüssigkeitsdicht abgeschlossen. Die Membran ist eine für die Pervaporation geeignete Membran. Solche Membranen sind hinreichend aus dem Stand der Technik bekannt, so dass hierauf nicht gesondert eingegangen wird. Unterhalb der Membran **7** ist eine Permeatkammer **8** vorgesehen, in der, beispielsweise mittels einer in Flussrichtung hinter einem Luftauslass **9** aus der Kammer **8** angeordneten, hier nicht dargestellten Vakuumpumpe, ein Unterdruck erzeugt wird, und die gleichzeitig einen Lufteinlass **11** aufweist, so dass bei Unterdruck ein Luftstrom durch die Kammer **8** geführt wird und mit dem Luftstrom Wasserdampf, der durch die Membran **7** aus dem Sumpf **6** abgeführt wurde, aus der Kammer **8** abgeführt wird. Der Stofftransport über die Membran **7** kann auch alternativ oder in Ergänzung hierzu dadurch angeregt werden, dass die durch die Kammer **8** strömende Luft angeheizt ist.

An den Luftein- und -ausgängen der Permeatkammer **8** sind Aktivkohlefilter **12, 13** vorgesehen, die in dem Fall, dass die Membran **7** Undichtigkeiten aufweisen sollte, ein Austreten von Öl aus dem Kraftstofffilter verhindern.

Im Kraftstofffilter ist ein Wasserstandssensor **14** vorgesehen, der mit einer Steuerelektronik **15** verbunden ist, die beispielsweise die Durchflussmenge des Kraftstoffs durch den Filter steuert oder ein Warnsignal, beispielsweise über eine Warnlampe im Armaturenbrett eines Fahrzeugs, abgibt.

Der in Figur 2 dargestellte Kraftstofffilter entspricht in vielen Teilen dem in Figur 1 dargestellten. Der Einfachheit halber sind daher gleiche Bauteile des Kraftstofffilters mit gleichen Bezugsziffern versehen und werden nicht näher erläutert. Er unterschiedet sich von dem in Figur 1 dargestellten Kraftstofffilter im wesentlichen dadurch, dass anstatt einer für Membrantrennverfahren üblichen Membran eine Zeolithmembran **21** verwendet wird, deren Zeolith-Kristalle in einem Stahlsinterkörper gehalten sind. An der Unterseite des Stahlsinterkörpers ist vollflächig ein Aktivkohlefilter **22** vorgesehen, um im Falle von Undichtigkeiten der Membran **21** bzw. des Stahlsinterkörpers ein Auslaufen von Kraftstoff zu vermeiden. Der unterhalb der Membran **21** angeordneten Kammer **8** wird Warmluft zugeführt, die zusammen mit dem über die Membran **21** aus dem Sumpf **7** abgeführten Wasserdampf aus der Kammer **8** abgeführt wird. Alternativ oder in Ergänzung hierzu kann der Stofftransport über die Membran **21** dadurch angetrieben werden, dass der Druck in der Kammer **8** abgesenkt wird.

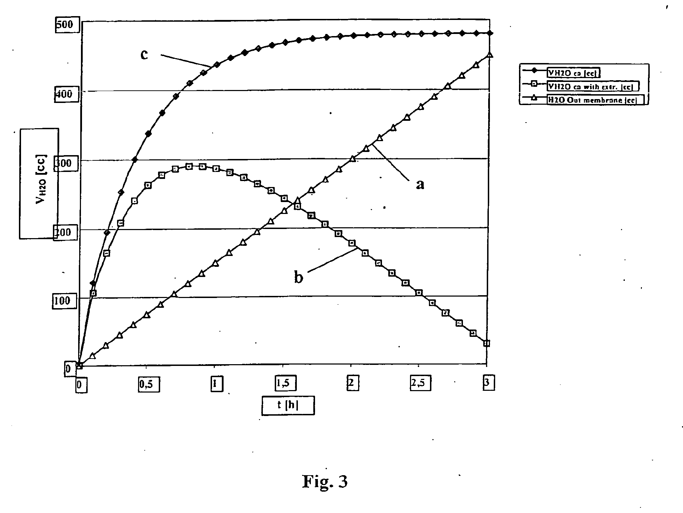

In Figur 3 ist ein experimenteller Verlauf von Wassermengen im Betrieb eines erfindungsgemäßen Kraftstofffilters über die Zeit in einem Kraftstoffsystem dargestellt, bei dem nur ein Teil des aus dem Tank über eine Kraftstoffpumpe abgepumpten Kraftstoffs direkt nach der Filterung der Verbrennung zugeführt und ein Großteil wieder in den Tank zurückgeführt wird. Die dargestellten Kurven wurden gemessen bei den folgenden Betriebsparametern:

| | |
|---|---|
| Tankvolumen: | 60 l |
| Kraftstoffverbrauch: | 6 l/h |
| Kraftstoffdurchsatz durch Filter: | 160 l/h |
| Anteil Wasser im Kraftstoff: | 10.000 ppm |
| Wasserseparationsrate des Filters: | 95 % |
| Effektives Sumpfvolumen: | 0,3 l |

Während gemäß dem Verlauf der Kurve a ein konstanter Durchsatz von Wasser durch die Membran in Höhe von in etwa 0,15 l/h zu beobachten war, stieg der Wasserpegel im Sumpf innerhalb der ersten ¾ Stunde auf fast 0,3 l an und wurde danach nahezu stetig geringer, wie Kurve **b** zu entnehmen ist. Die Summe des über die Zeit im Sumpf gesammelten Wassers zeigt Kurve c. Es ist klar erkennbar, dass zu Beginn des Filterprozesses viel Wasser aus dem Kraftstoff abgeschieden wird, während nach zwei Stunden die Kurve nahezu horizontal verläuft, also kaum noch Wasser aus dem Kraftstoff abgeschieden wird. Hieraus wird ersichtlich, dass zu diesem Zeitpunkt der wesentliche Teil des Wassers aus dem im Tank befindlichen Kraftstoff bereits herausgefiltert wurde.

Aus der Grafik ist ersichtlich, dass je nach Qualität des zu filternden Kraftstoffs insbesondere zu beginn des Filterungsprozesses eine große Menge Wasser anfällt, die im Sumpf des Kraftstofffilters gesammelt wird. Um zu vermeiden, dass die maximale Füllhöhe des Sumpfs überschritten wird, kann eine Ausgleichskammer vorgesehen sein, die mit dem Sumpf über ein Ventil verbunden ist und in die überschüssiges Wasser entleert wird, sobald die maximale Füllstandshöhe erreicht wird. Eine entsprechende Steuerung kann in Abhängigkeit vom Signal des Füllstandsensors **15** erfolgen.

## Patentansprüche

1. Kraftstofffilter, insbesondere Dieselfilter, mit einem Kraftstoffeinlass (2), einem Kraftstoffauslass (3) und Mitteln zum Trennen und Abführen von Wasser aus dem Kraftstoff (5) und dem Kraftstofffilter, mit mindestens einer semipermeablen Membran (7, 21), über die Wasser aus dem Kraftstofffilter abgeführt wird, **dadurch gekennzeichnet, dass** auf der Permeatseite der Membran (7, 21) ein Aktivkohlefilter (12, 13, 22) vorgesehen ist.

2. Kraftstofffilter nach Anspruch 1, **dadurch gekennzeichnet, dass** die Membran (7, 21) eine für Pervaporation geeignete Membran, insbesondere eine asynchrone PVA-Composite-Membran, ist.

3. Kraftstofffilter nach Anspruch 1 oder 2, **gekennzeichnet durch** Mittel zum Erzeugen eines Unterdrucks auf der Permeatseite der Membran (7, 21).

4. Kraftstofffilter nach einem der Ansprüche 1 bis 3, **dadurch gekennzeichnet, dass** die Membran (7, 21) mit mindestens einer mit Zeolith-Kristallen gebildeten Schicht aufgebaut ist.

5. Kraftstofffilter nach Anspruch 4, **gekennzeichnet durch** einen Stahlsinterkörper als Substrat für die Zeolith-Kristalle.

6. Kraftstofffilter nach einem der Ansprüche 1 bis 5, **dadurch gekennzeichnet, dass** auf der Permeatseite der Membran eine Permeatkammer vorgesehen ist.

7. Kraftstofffilter nach einem der Ansprüche 1 bis 6, **gekennzeichnet durch** einen Wasserabscheider und einen Sumpf (6), wobei die Membran (7, 21) im Bereich des Sumpfs (6), insbesondere am Boden des Sumpfs (6), angeordnet ist.

8. Kraftstofffilter nach Anspruch 7, **gekennzeichnet durch** einen im oberen Bereich des Sumpfs angeordneten Wasserstandssensor (14).

9. Kraftstofffilter nach Anspruch 8, **gekennzeichnet durch** eine mit dem Wasserstandssensor (14) verbundene Elektronik zum Abgeben eines Warnhinweises.

## Claims

1. Fuel filter, in particular diesel filter, having a fuel inlet (2), having a fuel outlet (3) and having means for separating and discharging water out of the fuel (5) and out of the fuel filter, having at least one semi-permeable diaphragm (7, 21) by means of which water is discharged out of the fuel filter, **characterized in that** an active charcoal filter (12, 13, 22) is provided on the permeate side of the diaphragm (7, 21).

2. Fuel filter according to Claim 1, **characterized in that** the diaphragm (7, 21) is a diaphragm which is suitable for pervaporation, in particular an asynchronous PVA composite diaphragm.

3. Fuel filter according to Claim 1 or 2, **characterized by** means for generating a vacuum on the permeate side of the diaphragm (7, 21).

4. Fuel filter according to one of Claims 1 to 3, **characterized in that** the diaphragm (7, 21) is constructed with at least one layer formed from zeolite crystals.

5. Fuel filter according to Claim 4, **characterized by** a sintered steel body as a substrate for the zeolite crystals.

6. Fuel filter according to one of Claims 1 to 5, **characterized in that** a permeate chamber is provided on the permeate side of the diaphragm.

7. Fuel filter according to one of Claims 1 to 6, **characterized by** a water separator and a sump (6), with the diaphragm (7, 21) being arranged in the region of the sump (6), in particular on the base of the sump (6).

8. Fuel filter according to Claim 7, **characterized by** a water level sensor (14) which is arranged in the upper region of the sump.

9. Fuel filter according to Claim 8, **characterized by** an electronic system, which is connected to the water level sensor (14), for outputting a warning signal.

## Revendications

1. Filtre à carburant, notamment filtre à gazole comportant une entrée de carburant (2), une sortie de carburant (3) et des moyens pour séparer et évacuer l'eau du carburant (5) et du filtre, comprenant au moins une membrane semi-perméable (7, 21) pour évacuer l'eau du filtre à carburant,
**caractérisé en ce que**
un filtre à charbon actif (12, 13, 22) est prévu sur le côté du perméat de la membrane (7, 21).

2. Filtre à carburant selon la revendication 1,
**caractérisé en ce que**
la membrane (7, 21) est une membrane appropriée pour la pervaporation, notamment une membrane composite PVA asynchrone.

3. Filtre à carburant selon la revendication 1 ou 2,
**caractérisé par**
des moyens pour créer une dépression du côté perméat de la membrane (7, 2 1) .

4. Filtre à carburant selon l'une des revendications 1 à 3,
**caractérisé en ce que**
la membrane (7, 21) est construite avec au moins une couche de cristaux de zéolithe.

5. Filtre à carburant selon la revendication 4,
**caractérisé par**
un corps fritté en acier comme substrat pour les cristaux de zéolithe.

6. Filtre à carburant selon l'une des revendications 1 à 5,
**caractérisé par**
une chambre à perméat du côté perméat de la membrane.

7. Filtre à carburant selon l'une des revendications 1 à 6,
**caractérisé par**
un séparateur d'eau et une bâche (6), la membrane (7, 21) étant prévue dans la région de la bâche (6), notamment au fond de la bâche (6).

8. Filtre à carburant selon la revendication 7,
**caractérisé par**
un capteur de niveau d'eau (14) dans la région supérieure de la bâche.

9. Filtre à carburant selon la revendication 8,
**caractérisé par**
une électronique reliée au capteur de niveau d'eau (14) pour donner une indication de signalisation.
